# EUROPÄISCHE PATENTSCHRIFT

(11) **EP 2 443 056 B1**
(45) Veröffentlichungstag und Bekanntmachung des Hinweises auf die Patenterteilung: **06.08.2014**
(21) Anmeldenummer: 10725736.2
(22) Anmeldetag: 18.06.2010
(51) Int. Cl.: B66B 13/08, E05F 15/14, F16G 3/00

(54) **KUPPLUNGSSYSTEM EINES AUFZUGSKABINENTÜRANTRIEBS**
COUPLING SYSTEM OF A LIFT CAGE DOOR DRIVE
SYSTÈME D'ACCOUPLEMENT D'UN ENTRAÎNEMENT DE PORTE DE CABINE D'ASCENSEUR

(30) Priorität: 19.06.2009 EP 09163291
(43) Veröffentlichungstag der Anmeldung: 25.04.2012
(73) Patentinhaber: Inventio AG, 6052 Hergiswil NW (CH)
(72) Erfinder: CHRISTEN, Jules, CH-6460 Altdorf (CH)
(74) Vertreter: Hirschberger, Petra
(86) Internationale Anmeldenummer: PCT/EP2010/058657
(87) Internationale Veröffentlichungsnummer: WO 2010/146168

(56) Entgegenhaltungen:
- EP-A- 0 543 523
- DE-C1- 4 414 065

## Beschreibung

Die Erfindung betrifft ein Kupplungssystem eines Aufzugskabinentürantriebs

Aus der Druckschrift DE 4414065 C1 ist ein Zahnriemenverbinder zum Koppeln eines Zahnriemens mit einem zu bewegenden Element, insbesondere einer Schiebetür für Aufzüge, bekannt, wobei der Zahnriemenverbinder eine Raste zur Herstellung einer formschlüssigen Verbindung mit dem Zahnriemen umfasst.

Der Erfindung liegt insbesondere die Aufgabe zugrunde, eine einfach zu montierende Kupplung mit einem Zugmittel mit periodischer Formschlussstruktur bereitzustellen, die eine einfache Feinjustierung der Position der Kupplung relativ zu dem Zugmittel ermöglicht. Sie wird gemäß der Erfindung durch die Merkmale des Anspruchs 1 gelöst. Weitere Ausgestaltungen ergeben sich aus den Unteransprüchen.

Die Erfindung geht aus von einem Kupplungssystem eines Aufzugskabinentürantriebs mit einem Zugmittel, mindestens einer an das Zugmittel ankoppelbaren Kupplungseinheit, einem Adapterelement, das eine erste Formschlusseinstellstruktur aufweist, die mit Formschlusselementen des Zugmittels eine erste Formschlusseinheit bildet, wobei diese Formschlusseinheit eine in definierten Formschluss-Einstellpositionen einstellbare Relativposition des Adapterelements in Bezug auf das Zugmittel sichert.

Es wird vorgeschlagen, dass die Kupplungseinheit eine zweite Formschlusseinheit aufweist, die eine in definierten Formschluss-Einstellpositionen einstellbare Relativposition des Adapterelements in Bezug auf die Kupplungseinheit sichert, wobei bei der zweiten Formschlusseinheit der Abstand zwischen unmittelbar benachbarten Formschluss-Einstellpositionen kleiner ist als der Abstand zwischen unmittelbar benachbarten Formschluss-Einstellpositionen der ersten Formschlusseinheit. Dadurch ist das Adapterelement mit dem Zugmittel innerhalb der Kupplungseinheit vorteilhaft um eine Distanz in einer Zugrichtung des Zugmittels verstellbar, die geringer ist als ein Teilungsabstand der Formschlusselemente des Zugmittels. Unter einem "Teilungsabstand" soll in diesem Zusammenhang insbesondere ein kleinster Abstand zwischen homologen Punkten benachbarter Formschlusselemente verstanden werden. Dies erlaubt eine Feinjustierung des Abstands der Kupplungseinheit in Zugrichtung des Zugmittels insbesondere zu Teilen einer Aufzugkabinentür. In einer entsprechenden Ausgestaltung der Erfindung kann auf eine Verwendung von Schraubenelementen zur Justierung verzichtet werden, wodurch eine Einstellung des Abstands auf besonders einfache Weise bewerkstelligt werden und eine Verstellung der Anordnung im Laufe eines Betriebs des Aufzugskabinentürantriebs vorteilhaft vermieden werden kann.

Unter einem "Formschluss" soll in diesem Zusammenhang insbesondere eine Verbindung verstanden werden, die durch ein Ineinandergreifen zumindest zweier Formschlusselemente entsteht. Die insbesondere im Zugmittel auftretenden Zugkräfte werden in Richtung der Flächennormalen der Formschlusselemente übertragen. Unter einer "Formschlusseinstellstruktur" soll in diesem Zusammenhang insbesondere eine Anordnung von Formschlusselementen verstanden werden.

Ferner wird vorgeschlagen, dass das Adapterelement an einer ersten Fläche die erste Formschlusseinstellstruktur der ersten Formschlusseinheit und an einer zweiten Fläche eine Formschlusseinstellstruktur der zweiten Formschlusseinheit aufweist. Dadurch kann eine besonders einfache Montage der Kupplungseinheit mit einem Zugmittel mit periodischer Formschlussstruktur erreicht werden. Außerdem kann vorteilhaft eine Feinjustierung der Position des Zugmittels relativ zur Kupplungseinheit ohne einen Einsatz von Schraubenelementen ermöglicht werden.

In einer vorteilhaften Ausgestaltung sind Formschlusselemente wenigstens einer Formschlusseinstellstruktur der zweiten Formschlusseinheit in periodischen Abständen angeordnet, wodurch eine einfache und flexible Positionsverstellung des Zugmittels relativ zur Kupplungseinheit ermöglicht wird. Unter "in periodischen Abständen" soll in diesem Zusammenhang insbesondere verstanden werden, dass ein Abstand zwischen beliebigen Formschlusselementen der Formschlusseinstellstruktur ein ganzzahliges Vielfaches eines kleinsten Abstands zwischen zwei unterschiedlichen Formschlusselementen beträgt. Insbesondere können auch Formschlusselemente an Positionen, die einem ganzzahligen Vielfachen eines kleinsten Abstands zwischen zwei unterschiedlichen Formschlusselementen entsprechen, ausgelassen werden, ohne die Funktion der Kupplungseinheit und den Gedanken der Erfindung zu beeinträchtigen. Vorzugsweise sind die in periodischen Abständen angeordneten Formschlusselemente wenigstens einer Formschlusseinstellstruktur der zweiten Formschlusseinheit an dem Adapterelement angeformt, wodurch eine besonders einfache Montage der Kupplungseinheit am Zugmittel und eine besonders einfache Positionsverstellung des Zugmittels relativ zur Kupplungseinheit ermöglicht werden kann.

Ferner wird vorgeschlagen, dass das Adapterelement einstückig ausgebildet ist, wodurch eine durch eine geringe Anzahl von Bauteilen besonders einfache Montage der Kupplungseinheit an das Zugmittel erreicht wird und die Kupplungseinheit besonders kostengünstig bereitgestellt werden kann. Grundsätzlich kann das Adapterelement jedoch auch mindestens zwei Einzelelemente umfassen und ein erstes Einzelelement an einer Oberfläche eine Formschlussstruktur aufweisen, die dazu vorgesehen ist, mit Formschlusselementen eines Zugmittels eine Formschlussverbindung herzustellen, und ein zweites Einzelelement kann an einer Oberfläche eine Formschlussstruktur mit zumindest einem Formschlusselement aufweisen, und die Einzelelemente des Adapterelements können in einem montierten Zustand durch Formschluss, Kraftschluss oder Stoffschluss miteinander verbunden sein.

Des Weiteren wird vorgeschlagen, dass die Kupplungseinheit ein Gehäuse umfasst, das in einem Betriebszustand das Adapterelement und das Zugmittel zumindest teilweise aufnimmt, wodurch eine besonders einfache Montage der Kupplungseinheit an das Zugmittel erreicht wird. Unter "das Adapterelement teilweise aufnehmen" soll in diesem Zusammenhang insbesondere verstanden werden, dass sich in einem Betriebzustand ein durch Außenabmessungen des Adapterelements gebildetes umhüllendes Volumen zumindest teilweise innerhalb eines Volumens befindet, das durch Außenabmessungen des Gehäuses gegeben ist, und vorzugsweise, dass sich mehr als 50% des umhüllenden Volumens des Adapterelements innerhalb des durch Außenabmessungen des Gehäuses gebildeten Volumens befinden.

In einer weiteren vorteilhaften Ausgestaltung weist das Gehäuse zumindest ein von einer Ausnehmung oder einem Fortsatz gebildetes Befestigungselement auf, wodurch eine besonders einfache mechanische Verbindung der Kupplungseinheit zu anderen Objekten, insbesondere zu einer Aufzugskabinentür oder anderen Elementen, die mit der Aufzugskabinentür mechanisch verbunden sind, ermöglicht wird. Vorzugsweise kann das Befestigungselement als Durchgangsloch im Gehäuse ausgeformt und die Kupplungseinheit mittels einer Schraube, die durch das Durchgangsloch in ein anderes Objekt, insbesondere eine Aufzugkabinentür, geschraubt ist, befestigt sein.

Des Weiteren wird vorgeschlagen, dass das Gehäuse ein erstes Stützelement zur Abstützung des Zugmittels aufweist, wodurch eine Montage der Kupplungseinheit an das Zugmittel besonders einfach durchgeführt werden kann.

Zudem wird vorgeschlagen, dass das Gehäuse ein zweites Stützelement mit einer angeformten Formschlusseinstellstruktur der zweiten Formschlusseinheit umfasst, die dazu vorgesehen ist, mit der weiteren Formschlusseinstellstruktur der zweiten Formschlusseinheit eine formschlüssige Verbindung herzustellen, wodurch eine Montage der Kupplungseinheit an das Zugmittel und eine Feinjustierung der Position des Zugmittels relativ zur Kupplungseinheit, und insbesondere relativ zu einer Aufzugkabinentür, besonders einfach durchgeführt werden kann.

In einer vorteilhaften Ausgestaltung sind die Formschlusselemente der angeformten Formschlusseinstellstruktur des zweiten Stützelements des Gehäuses zumindest abschnittsweise in periodischen Abständen angeordnet. Dadurch wird eine besonders einfache und flexible Feinjustierung der Position des Zugmittels relativ zur Kupplungseinheit und insbesondere relativ zu einer Aufzugkabinentür ermöglicht. Insbesondere können auch hierbei Formschlusselemente an Positionen, die einem ganzzahligen Vielfachen eines kleinsten Abstands zwischen zwei unterschiedlichen Formschlusselementen entsprechen, ausgelassen werden, ohne die Funktion der Kupplungseinheit und den Gedanken der Erfindung zu beeinträchtigen.

Es wird vorgeschlagen, dass das Gehäuse eine zur Montage abnehmbare Deckeleinheit umfasst, wodurch eine einfache Montage der Kupplungseinheit an das Zugmittel und eine einfache Verstellung der Position des Zugmittels relativ zur Kupplungseinheit ermöglicht wird. Vorzugsweise kann die Deckeleinheit zum Abschluss der Montage an einer Seite der Kupplungseinheit mittels Schrauben befestigt werden. Mit besonderem Vorteil kann die Deckeleinheit bei im Gehäuse der Kupplungseinheit eingelegtem Zugmittel und Adapterelement von vorne in Richtung auf das Adapterelement aufgelegt und durch Zusammendrücken der Deckeleinheit und des übrigen Gehäuse mittels Federelementen montiert werden. Dem Fachmann sind die zu einer solchen Montage erforderlichen Federelemente vertraut.

Ferner wird vorgeschlagen, dass das Gehäuse, in Längsrichtung eines Zugmittelaufnahmebereichs des Gehäuses betrachtet, zwei im Wesentlichen L-förmige Profile aufweist. Dadurch kann neben einer besonders einfachen Montage auch eine kostengünstige Lösung für die Kupplungseinheit erreicht werden.

In einer vorteilhaften Ausgestaltung ist das Zugmittel als Zahnriemen ausgebildet, wodurch aufgrund einer verbreiteten Anwendung von Zahnriemen eine kostengünstige Lösung eines Kupplungssystems bereitgestellt werden kann. Vorzugsweise sind die als Zähne des Zahnriemens ausgebildeten Formschlusselemente auf der Innenseite des Zahnriemens angeordnet. Insbesondere ist die Kupplungseinheit vorteilhaft dazu vorgesehen, bei abgelängten Endlos-Zahnriemen eine Verbindung beider Enden des Zahnriemens durch eine Ankopplung herzustellen.

Des Weiteren wird vorgeschlagen, dass das Adapterelement zumindest im Wesentlichen aus Leichtmetall oder Kunststoff hergestellt ist. Unter einem "Leichtmetall" soll in diesem Zusammenhang insbesondere ein Metall mit einer Massendichte von weniger als 5,0 g/cm³ verstanden werden. Dadurch kann eine besonders kostengünstige Lösung mit langer Lebensdauer bereitgestellt werden. Unter "im Wesentlichen" soll in diesem Zusammenhang insbesondere verstanden werden, dass ein Volumenanteil des Adapterelements zu mindestens 60% aus Leichtmetall oder Kunststoff besteht. Unter "zumindest im Wesentlichen" soll in diesem Zusammenhang insbesondere verstanden werden, dass das Adapterelement auch ausschließlich aus Leichtmetall oder Kunststoff bestehen kann.

Zudem wird vorgeschlagen, dass die Formschlusseinstellstruktur der zweiten Formschlusseinheit eine Verzahnung mit Kerbflanken aufweist. Unter einer "Verzahnung mit Kerbflanken" soll in diesem Zusammenhang verstanden werden, dass die Formschlusselemente der Formschlusseinstellstruktur Flanken aufweisen, die als Geraden ausgebildet sind, die zueinander in einem Winkel stehen, der vorteilhaft größer als 10° und kleiner als 135° ist.

Es wird ein Aufzugkabinentürantrieb vorgeschlagen, der zumindest ein Kupplungssystem umfasst. Durch die bereitgestellte einfache Justierungsmöglichkeit der Position des Zugmittels relativ zur Kupplungseinheit des Kupplungssystems kann eine sehr einfache und exakte Schließung von einflügeligen und zweiflügeligen, mittig schließenden und von teleskopartig schließenden Aufzugskabinentüren unter Verwendung von weit verbreiteten, kostengünstigen Zugmitteln erzielt werden.

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ansicht einer Schachttür und einer Aufzugskabine mit einem Aufzugkabinentürantrieb,
- Fig. 2: eine Vorderansicht eines Kupplungssystems des Aufzugskabinentürantriebs aus Fig. 1 mit einer Kupplungseinheit (ohne Deckeleinheit) und einem Zugmittel im Betriebszustand,
- Fig. 3: eine Seitenansicht der Kupplungseinheit aus Fig. 2, mit Deckeleinheit, ohne Adapterelement und ohne Zugmittel,
- Fig. 4: eine Detailansicht des Adapterelements aus Fig. 2,
- Fig. 5: eine weitere Ausführungsform eines Adapterelements,
- Fig. 6: eine weitere Ausführungsform eines Adapterelements,
- Fig. 7: eine weitere Ausführungsform eines Adapterelements,
- Fig. 8: eine weitere Ausführungsform eines Adapterelements und
- Fig. 9: eine weitere Ausgestaltung eines Kupplungssystems.

### Beschreibung der Ausführungsbeispiele

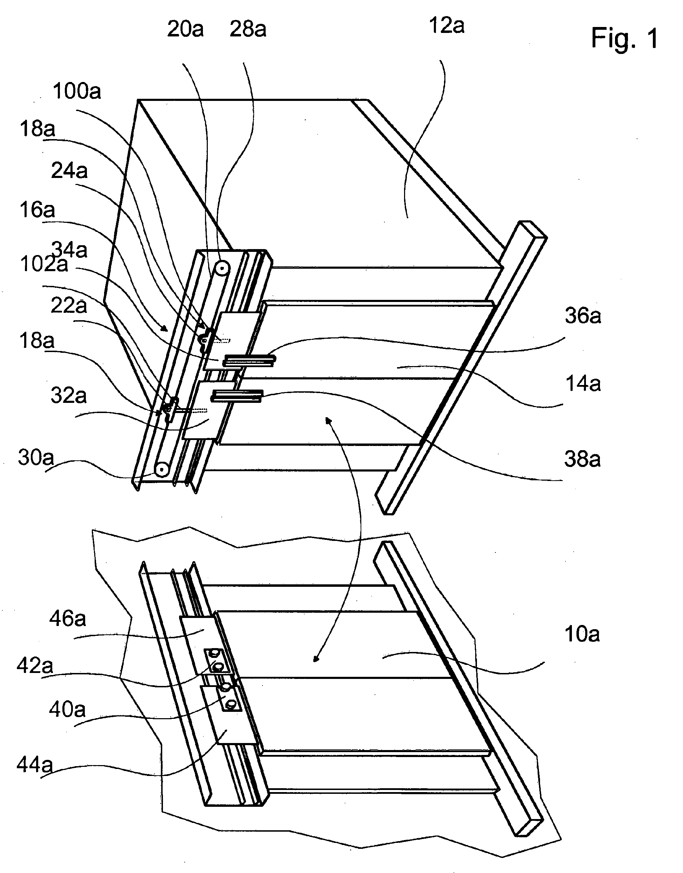

In den Figuren 1 bis 4 sowie 5, 6, 7, 8 und 9 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a bis f hinzugefügt, wobei bezüglich gleich bleibender Bauteile, Merkmale und Funktionen auf die Beschreibung des Ausführungsbeispiels der Figuren 1 bis 4 verwiesen werden kann.

In der Fig. 1 ist eine Ansicht eines Stockwerks in einem Gebäude mit einer Schachttür 10a im linken Teil und einer Aufzugskabine 12a mit einer zweiflügeligen, mittig schließenden Aufzugskabinentür 14a im rechten Teil dargestellt. Aus Gründen der Übersichtlichkeit ist die Darstellung so gewählt, als wäre die Anordnung von Aufzugskabine 12a und Schachttüre 10a mittels eines Scharniers, das senkrecht in der Figurenmitte verläuft, zu beiden Seiten hin aufgeklappt worden.

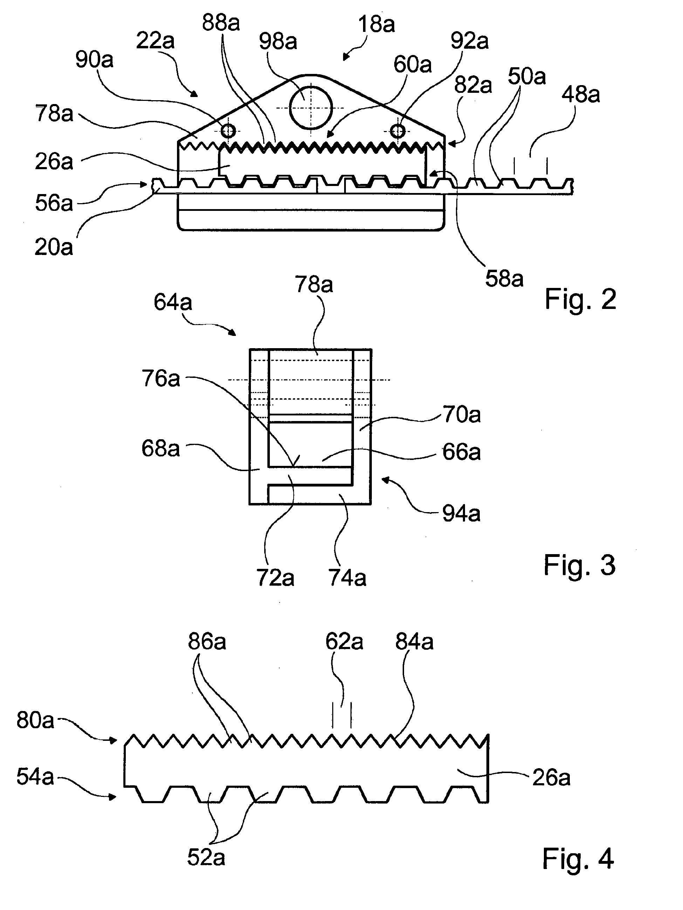

Ein oberhalb der Aufzugskabinentür 14a angeordneter Aufzugskabinentürantrieb 16a umfasst ein Kupplungssystem 18a mit einem als Zahnriemen ausgebildeten Zugmittel 20a, das um eine Antriebsrolle 28a und eine Umlenkrolle 30a gelegt ist. An tafelförmigen Fortsätzen 32a, 34a (Türflügel-Laufwagen) der Aufzugskabinentür 14a sind jeweils Mitnehmerelemente 36a, 38a angeordnet, die dazu vorgesehen sind, im Betriebszustand in entsprechende Schiebeelemente 40a, 42a an Fortsätzen 44a, 46a der Schachttür 10a einzugreifen. Bei einem Öffnen der Aufzugskabinentür 14a mittels des Aufzugskabinentürantriebs 16a wird durch die Mitnehmerelemente 36a, 38a in bekannter Weise ebenfalls die Schachttür 10a geöffnet. Bei einem Zugmittel 20a mit periodisch angeordneten Formschlusselementen 50a (Fig. 2) entspricht bei exakt geschlossener Aufzugskabinentür 14a eine Position einer Kupplungseinheit 22a, 24a relativ zu den Fortsätzen 32a, 34a der Aufzugskabinentür 14a nicht notwendigerweise einer durch die periodisch angeordneten Formschlusselemente 50a vorgegebenen Position, wodurch ein Feinjustierbedarf entsteht, der kleiner ist als ein kleinster Abstand 48a zwischen zwei unterschiedlichen Formschlusselementen 50a des Zugmittels 20a.

Die Fortsätze 32a, 34a der Aufzugskabinentür 14a in Fig. 1 sind mit jeweils einer Kupplungseinheit 22a, 24a verbunden, die an das Zugmittel 20a angekoppelt ist. Jede Kupplungseinheit 22a, 24a umfasst ein Adapterelement 26a (Fig. 2), das eine erste Formschlusseinstellstruktur 54a mit Formschlusselementen 52a aufweist, die in einem Betriebszustand mit einer durch Formschlusselemente 50a gebildeten Formschlusseinstellstruktur 56a des Zugmittels 20a eine erste Formschlusseinheit 58a bildet. Jede Kupplungseinheit 22a, 24a weist eine zweite Formschlusseinheit 60a auf, die dazu vorgesehen ist, eine in Bezug auf ein erstes Stützelement 76a der Kupplungseinheit (22, 24) einstellbare Relativposition des Adapterelements 26a zu sichern. Diese zweite Formschlusseinheit 60a weist einen kleinsten Abstand 62a zweier unterschiedlicher Formschluss-Einstellpositionen auf, der kleiner ist als ein kleinster Abstand 48a zweier unterschiedlicher Formschluss-Einstellpositionen der ersten Formschlusseinheit 58a, wodurch eine Feinjustierung der Position des Zugmittels 20a relativ zur Kupplungseinheit 22a, 24a ermöglicht wird.

In der Fig. 2 ist eine Kupplungseinheit 22a aus Fig. 1 im Detail dargestellt. Die Kupplungseinheit 22a umfasst ein Gehäuse 64a, das, in Längsrichtung eines Zugmittelaufnahmebereichs 66a des Gehäuses 64a betrachtet, zwei im Wesentlichen L-förmige Profile 68a, 70a aufweist (Fig. 3), deren Querstreben 72a, 74a gegeneinander versetzt angeordnet sind. Eine Deckeleinheit 94a, die in Fig. 2 aus Gründen der Übersichtlichkeit nicht gezeigt ist, umfasst eines der beiden L-förmigen Profile 70a und zwei Schraubenelemente 90a, 92a, mittels derer die beiden L-förmigen Profile 68a, 70a miteinander verbunden sind. Weiterhin umfasst das Gehäuse 64a ein einstückig ausgebildetes Adapterelement 26a (Fig. 4), das an einer ersten Fläche die durch Formschlusselemente 52a gebildete erste Formschlusseinstellstruktur 54a der ersten Formschlusseinheit 58a zum Formschluss mit einer durch Formschlusselemente 50a, die als Zähne eines Zahnriemens ausgebildet sind, geformten Formschlusseinstellstruktur 56a eines Zugmittels 20a aufweist, so dass bei einem angetriebenen Zugmittel 20a auf effektive Weise Kräfte in Bewegungsrichtung des Zugmittels 20a auf die Kupplungseinheit 22a übertragen werden können. In einem Betriebszustand nimmt das Gehäuse 64a das Adapterelement 26a und das Zugmittel 20a wie in Fig. 2 dargestellt zumindest teilweise auf. Das Zugmittel 20a und das Adapterelement 26a werden durch das erste Stützelement 76a des Gehäuses 64a von unten abgestützt. An einer zweiten Fläche des Adapterelements 26a ist an der Oberseite eine Formschlusseinstellstruktur 80a der zweiten Formschlusseinheit 60a angeformt, die als Verzahnung aus Kerbflanken 84 ausgebildet ist. Das Gehäuse 64a umfasst ein zweites Stützelement 78a mit einer angeformten Formschlusseinstellstruktur 82a der zweiten Formschlusseinheit 60a, die dazu vorgesehen ist, mit der Formschlusseinstellstruktur 80a auf der zweiten Fläche des Adapterelements 26a eine formschlüssige Verbindung herzustellen. Beide Formschlusseinstellstrukturen 80a, 82a der zweiten Formschlusseinheit 60a sind in periodischen Abständen angeordnet. Zwischen der Formschlusseinstellstruktur 80a des Adapterelements 26a und der Formschlusseinstellstruktur 82a des zweiten Stützelements 78a des Gehäuses 64a sind durch die gegebenen Varianten zur Herstellung einer Formschlussverbindung unterschiedliche relative Positionen zwischen Adapterelement 26a und Zugmittel 20a einerseits und der Kupplungseinheit 22a andererseits einstellbar.

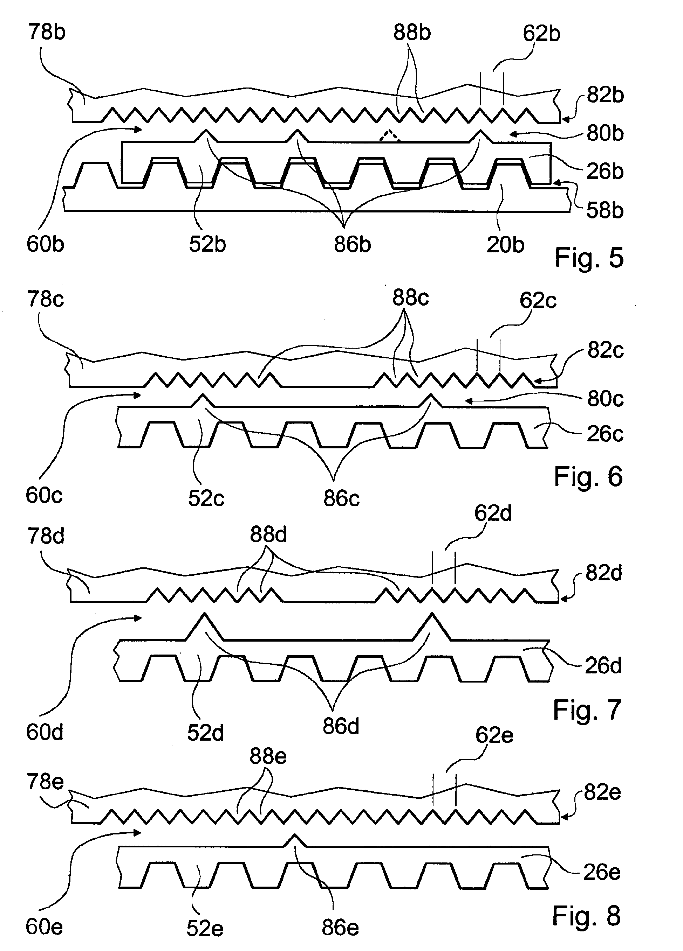

Weitere Ausgestaltungen der zweiten Formschlusseinheit 60 durch jeweils eine Formschlusseinstellstruktur 80 des Adapterelements 26 und eine Formschlusseinstellstruktur 82 am Stützelement 78 des Gehäuses 64 sind in den Fig. 5 bis 8 dargestellt. Das Adapterelement 26 ist in allen Ausgestaltungen aus einer Aluminium-Magnesium-Silizium-Legierung gefertigt, die zu mehr als 90% und daher im Wesentlichen aus Aluminium besteht.

In Fig. 5 entspricht eine Formschlusseinstellstruktur 82b an einem Stützelement 78b eines Gehäuses 64b derjenigen der Fig. 2. Eine Formschlusseinstellstruktur 80b einer zweiten Formschlusseinheit 60b an einem Adapterelement 26b weist drei Formschlusselemente 86b in periodischen Abständen auf. Alle Abstände der drei Formschlusselemente 86b betragen ein Vielfaches eines kleinsten Abstands 62b zwischen zwei unterschiedlichen Formschlusselementen 88b der Formschlusseinstellstruktur 82b am Stützelement 78b des Gehäuses 64b. Zur Verdeutlichung einer Periodizität ist ein in der Ausführung ausgelassenes Formschlusselement 86b durch eine gestrichelte Linie angedeutet.

In Fig. 6 sind Formschlusselemente 88c einer angeformten Formschlusseinstellstruktur 82c eines zweiten Stützelements 78c eines Gehäuses 64c in zwei Abschnitten in periodischen Abständen angeformt. Auch hier entsprechen alle möglichen Abstände zwischen Formschlusselementen 88c der angeformten Formschlusseinstellstruktur 82c am Stützelement 78c des Gehäuses 64c sowohl innerhalb der Abschnitte als auch zwischen Formschlusselementen 88c verschiedener Abschnitte einem Vielfachen eines kleinsten Abstands 62c zwischen zwei unterschiedlichen Formschlusselementen 88c der Formschlusseinstellstruktur 82c.

Im Unterschied zu Fig. 6 sind in Fig. 7 Formschlusselemente 86d einer Formschlusseinstellstruktur 80d einer zweiten Formschlusseinheit 60d des Adapterelements 26d so ausgestaltet, dass nur ein oberer Teil der beiden Formschlusselemente 86d eine Formschlussverbindung herstellt.

In Fig. 8 weist eine zweite Formschlusseinheit 60e ein einziges Formschlusselement 86e in einer ersten Formschlusseinstellstruktur 80e auf einer zweiten Fläche eines Adapterelements 26e und eine zweite Formschlusseinstellstruktur 82e an einem zweiten Stützelement 78e eines Gehäuses 64e mit durchgängig angeordneten Formschlusselementen 88e auf.

Die in den Figuren 5 bis 8 dargestellten Ausführungsbeispiele dienen zur Veranschaulichung einer möglichen Realisierung der Erfindung und sind keinesfalls als abschließende Aufzählung anzusehen.

Zu einer Montage des Kupplungssystems 18a der Fig. 2 wird der Formschluss zwischen der ersten Formschlusseinstellstruktur 54a des Adapterelements 26a und dem Zahnriemen oder, wie in der Fig. 2 dargestellt, zwei freien Enden eines abgelängten Endlos-Zahnriemens hergestellt. Eine Festlegung einer gewünschten relativen Position des Zugmittels 20a innerhalb der Kupplungseinheit 22a erfolgt durch Herstellung der zweiten Formschlusseinheit 60a zwischen Formschlusselementen 86a einer Formschlusseinstellstruktur 80a des Adapterelements 26a und Formschlusselementen 88a einer Formschlusseinstellstruktur 82a am zweiten Stützelement 78a des Gehäuses 64a. In dieser Anordnung wird die gewünschte relative Position bereits hergestellt, ohne dass ein Schraubenelement eingesetzt wurde. Zum Abschluss wird eine zur Montage abnehmbare Deckeleinheit 94a des Gehäuses 64a von vorne aufgesetzt und mittels zweier zugehöriger Schraubenelemente 90a, 92a in Position gehalten.

Jede montierte Kupplungseinheit 22a, 24a aus Fig. 1 wird durch ein Schraubenelement an einem Befestigungselement 98a (siehe Fig. 2), das als eine von einer als Durchgangsloch ausgebildeten Ausnehmung des Gehäuses 64a ausgestaltet ist, mit einem Verbindungselement 100a, 102a mechanisch verbunden, das jeweils an einem der tafelförmigen Fortsätze 32a, 34a (Türflügel-Laufwagen) der Aufzugskabinentür 14a aus Fig. 1 angeordnet ist.

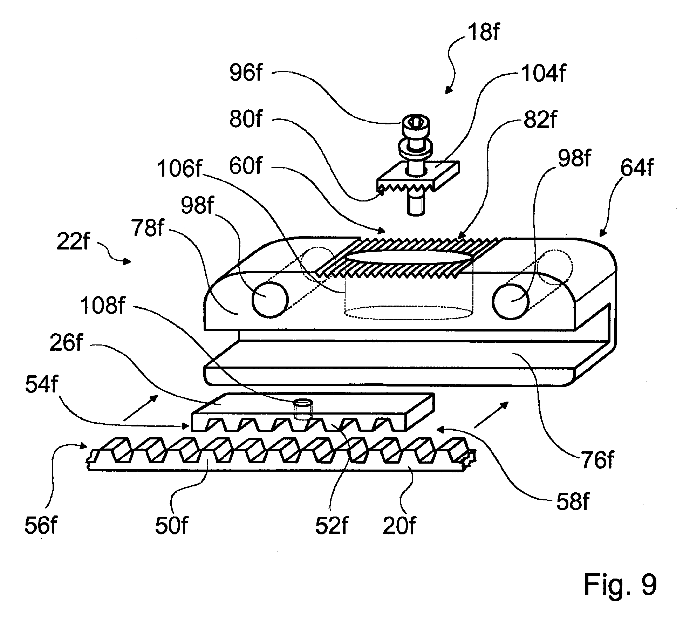

Eine weitere Ausgestaltung eines Kupplungssystems 18f mit einer Kupplungseinheit 22f zeigt Fig. 9. Ein Adapterelement 26f umfasst eine erste Formschlusseinstellstruktur 54f mit Formschlusselementen 52f, die in einem Betriebszustand mit einer durch Formschlusselemente 50f gebildeten Formschlusseinstellstruktur 56f eines Zugmittels 20f eine erste Formschlusseinheit 58f bildet. Im Unterschied zu den bisherigen Ausführungsformen weist eine Kupplungseinheit 22f eine zweite Formschlusseinheit 60f an ihrer Oberseite auf. Eine erste Formschlusseinstellstruktur 80f der zweiten Formschlusseinheit 60f ist an einer Oberfläche an der Oberseite eines Gehäuses 64f angeformt. Eine zweite Formschlusseinstellstruktur 82f der zweiten Formschlusseinheit 60f ist in Form einer gelochten Halteplatte 104f ausgebildet. Nach einer Herstellung eines Formschlusses zwischen der ersten Formschlusseinstellstruktur 54f an einer ersten Oberfläche des Adapterelements 26f und dem als Zahnriemen ausgebildeten Zugmittel 20f oder zwei freien Enden eines abgelängten Endlos-Zahnriemens wird die Formschlusseinheit 58f aus dem Zugmittel 20f und dem Adapterelement 26f auf einem ersten Stützelement 76f des Gehäuses 64f angeordnet. Ein Schraubenelement 96f mit angeformtem Gewinde greift durch die gelochte Halteplatte 104f und durch eine in der Oberseite des Gehäuses 64f angeformte Ausnehmung 106f in Form eines Langlochs in eine an einer zweiten, ansonsten planen Oberfläche des Adapterelements 26f angeordnete Gewindebohrung 108f. In einer ausgewählten Stellung des Schraubenelements 96f wird ein Verschieben des Adapterelements 26f und ein Herstellen einer gewünschten Position der Formschlusseinheit 60f innerhalb der Kupplungseinheit 22f ermöglicht und durch ein Tieferstellen des Schraubenelements 96f fixiert. Es soll besonders betont werden, dass das Schraubenelement 96f dazu vorgesehen ist, die zweite Formschlusseinheit 60f zu sichern. Ein Kraftschluss durch ein starkes Anziehen des Schraubenelements 96f ist von untergeordneter Bedeutung, sofern die Formschlusseinheit 60f der beiden Formschlusseinstellstrukturen 80f, 82f bestehen bleibt, so dass eventuelle Lockerungen des Schraubenelements 96f während eines Betriebs des Aufzugskabinentürantriebs 16f ohne Auswirkungen auf eine Funktion desselben bleiben.

## Patentansprüche

1. Kupplungssystem (18) eines Aufzugskabinentürantriebs (16),
umfassend ein Zugmittel (20), mindestens eine an das Zugmittel (20) ankoppelbare Kupplungseinheit (22, 24) und ein Adapterelement (26), das eine erste Formschlusseinstellstruktur (54) aufweist, die mit Formschlusselementen (50) des Zugmittels (20) eine erste Formschlusseinheit (58) bildet, wobei die Formschlusseinheit (58) eine in definierten Formschluss-Einstellpositionen einstellbare Relativposition des Adapterelements (26) in Bezug auf das Zugmittel (20) sichert,
**dadurch gekennzeichnet, dass**
die Kupplungseinheit (22, 24) eine zweite Formschlusseinheit (60) aufweist, die eine in definierten Formschluss-Einstellpositionen einstellbare Relativposition des Adapterelements (26) in Bezug auf die Kupplungseinheit (22, 24) sichert, wobei bei der zweiten Formschlusseinheit (60) ein Abstand (62) zwischen unmittelbar benachbarten Formschluss-Einstellpositionen kleiner ist als ein Abstand (48) zwischen unmittelbar benachbarten Formschluss-Einstellpositionen der ersten Formschlusseinheit (58).

2. Kupplungssystem (18) nach Anspruch 1,
**dadurch gekennzeichnet, dass**
das Adapterelement (26) an einer ersten Fläche die erste Formschlusseinstellstruktur (54) der ersten Formschlusseinheit (58) und an einer zweiten Fläche eine Formschlusseinstellstruktur (80) der zweiten Formschlusseinheit (60) aufweist.

3. Kupplungssystem (18) nach Anspruch 1 oder 2,
**dadurch gekennzeichnet, dass**
Formschlusselemente (86, 88) wenigstens einer Formschlusseinstellstruktur (80, 82) der zweiten Formschlusseinheit (60) in periodischen Abständen angeordnet sind.

4. Kupplungssystem (18) nach einem der vorhergehenden Ansprüche,
**dadurch gekennzeichnet, dass**
das Adapterelement (26) einstückig ausgebildet ist.

5. Kupplungssystem (18) nach einem der vorhergehenden Ansprüche,
**dadurch gekennzeichnet, dass**
die Kupplungseinheit (22, 24) ein Gehäuse (64) umfasst, das in einem Betriebszustand das Adapterelement (26) und das Zugmittel (20) zumindest teilweise aufnimmt.

6. Kupplungssystem (18) nach Anspruch 2,
**dadurch gekennzeichnet, dass**
die Kupplungseinheit (22, 24) ein Gehäuse (64) umfasst, das in einem Betriebszustand das Adapterelement (26) und das Zugmittel (20) zumindest teilweise aufnimmt.

7. Kupplungssystem (18) nach Anspruch 5,
**dadurch gekennzeichnet, dass**
das Gehäuse (64) zumindest ein von einer Ausnehmung oder einem Fortsatz gebildetes Befestigungselement (98) aufweist.

8. Kupplungssystem (18) nach Anspruch 5,
**dadurch gekennzeichnet, dass**
das Gehäuse (64) ein erstes Stützelement (76) zur Abstützung des Zugmittels (20) aufweist.

9. Kupplungssystem (18) nach Anspruch 6,
**dadurch gekennzeichnet, dass**
das Gehäuse (64) ein zweites Stützelement (78) mit einer angeformten Formschlusseinstellstruktur (82) der zweiten Formschlusseinheit (60) umfasst, die dazu vorgesehen ist, mit der weiteren Formschlusseinstellstruktur (80) der zweiten Formschlusseinheit (60) eine formschlüssige Verbindung herzustellen.

10. Kupplungssystem (18) nach Anspruch 9,
**dadurch gekennzeichnet, dass**
Formschlusselemente (88) der angeformten Formschlusseinstellstruktur (82) des zweiten Stützelements (78) des Gehäuses (64) zumindest abschnittsweise in periodischen Abständen angeformt sind.

11. Kupplungssystem (18) nach Anspruch 5,
**dadurch gekennzeichnet, dass**
das Gehäuse (64), in Längsrichtung eines Zugmittelaufnahmebereichs (66) des Gehäuses (64) betrachtet, zwei im Wesentlichen L-förmige Profile (68, 70) aufweist.

12. Kupplungssystem (18) nach einem der vorhergehenden Ansprüche,
**dadurch gekennzeichnet, dass**
das Zugmittel (20) als Zahnriemen ausgebildet ist.

13. Kupplungssystem (18) nach einem der vorhergehenden Ansprüche,
**dadurch gekennzeichnet, dass**
das Adapterelement (26) zumindest im Wesentlichen aus Leichtmetall oder Kunststoff hergestellt ist.

14. Kupplungssystem (18) nach einem der vorhergehenden Ansprüche,
**dadurch gekennzeichnet, dass**
zumindest eine Formschlusseinstellstruktur (80, 82) der zweiten Formschlusseinheit (60) eine Verzahnung mit Kerbflanken (84) aufweist.

15. Aufzugkabinentürantrieb (16),
**gekennzeichnet durch**
zumindest ein Kupplungssystem (18) nach einem der Ansprüche 1 bis 14.

## Claims

1. Coupling system (18) of a lift cage door drive (16), comprising a traction means (20), at least on coupling unit (22, 24) which can be coupled to the traction means (20) and an adapter element (26) having a first interlock adjustment structure (54) which together with interlock elements (50) of the traction means (20) forms a first interlocked unit (58), wherein the interlocked unit (58) secures a relative position, which is adjustable into defined interlocking adjustment positions, of the adapter element (26) with respect to the traction means (20), **characterised in that** the coupling unit (22, 24) comprises a second interlock unit (60) which secures a relative position, which is adjustable into defined interlocking adjustment positions, of the adapter element (26) with respect to the coupling unit (22, 24), wherein at the second interlocked unit (60) a spacing (62) between directly adjacent interlocking adjustment positions is smaller than a spacing (48) between directly adjacent interlocking adjustment positions of the first interlocked unit (58).

2. Coupling system (18) according to claim 1, **characterised in that** the adapter element (26) has at a first surface the first interlock adjustment structure (54) of the first interlocked unit (58) and at a second surface an interlock adjustment structure (80) of the second interlocked unit (60).

3. Coupling system (18) according to claim 1 or 2, **characterised in that** interlock elements (86, 88) of at least one interlocking adjustment structure (80, 82) of the second interlocked unit (60) are arranged at periodic intervals.

4. Coupling system (18) according to any one of the preceding claims, **characterised in that** the adapter element (26) is of integral construction.

5. Coupling system (18) according to any one of the preceding claims, **characterised in that** the coupling unit (22, 24) comprises a housing (64) which in an operational state at least partly receives the adapter element (26) and the traction means (20).

6. Coupling system (18) according to claim 2, **characterised in that** the coupling unit (22, 24) comprises a housing (64) which in an operational state at least partly receives the adapter element (26) and the traction means (20).

7. Coupling system (18) according to claim 5, **characterised in that** the housing (64) comprises at least one fastening element (98) formed by a recess or a projection.

8. Coupling system (18) according to claim 5, **characterised in that** the housing (64) comprises a first support element (76) for supporting the traction means (20).

9. Coupling system (18) according to claim 6, **characterised in that** the housing (64) comprises a second support element (78) with a shaped-on interlock adjustment structure (82) of the second interlocked unit (60) which is provided for the purpose of producing an interlocking connection with the further interlock adjustment structure (80) of the second interlocked unit (60).

10. Coupling system (18) according to claim 9, **characterised in that** the interlock elements (88) of the shaped-on interlock adjustment structure (82) of the second support element (78) of the housing (64) are shaped-on at periodic intervals at least in sections.

11. Coupling system (18) according to claim 5, **characterised in that** the housing (64) has two substantially L-shaped profiles (68, 70) as considered in longitudinal direction of a traction means receiving region (66) of the housing (64).

12. Coupling system (18) according to any one of the preceding claims, **characterised in that** the traction means (20) is constructed as a cogged belt.

13. Coupling system (18) according to any one of the preceding claims, **characterised in that** the adapter element (26) is produced at least substantially of light metal or synthetic material.

14. Coupling system (18) according to any one of the preceding claims, **characterised in that** at least one interlock adjustment structure (80, 82) of the second interlocked unit (60) has a toothing with notch flanks (84).

15. Lift cage door drive (16), **characterised by** at least one coupling system (18) according to any one of claims 1 to 14.

## Revendications

1. Système d'accouplement (18) d'un entraînement de porte de cabine d'ascenseur (16), comprenant un moyen de traction (20), au moins une unité d'accouplement (22, 24) apte à être accouplée au moyen de traction (20), et un élément adaptateur (26) qui présente une première structure de réglage par complémentarité de forme (54) qui forme avec des éléments à complémentarité de forme (50) du moyen de traction (20) une première unité à complémentarité de forme (58), étant précisé que l'unité à complémentarité de forme (58) assure une position relative, réglable dans des positions de réglage par complémentarité de forme définies, de l'élément adaptateur (26) par rapport au moyen de traction (20),
**caractérisé en ce que** l'unité d'accouplement (22, 24) présente une seconde unité à complémentarité de forme (60) qui assure une position relative, réglable dans des positions de réglage par complémentarité de forme définies, de l'élément adaptateur (26) par rapport à l'unité d'accouplement (22, 24), étant précisé que sur la seconde unité à complémentarité de forme (60), une distance (62) entre des positions de réglage par complémentarité de forme directement voisines est plus petite qu'une distance (48) entre des positions de réglage par complémentarité de forme de la première unité à complémentarité de forme (58) directement voisines.

2. Système d'accouplement (18) selon la revendication 1, **caractérisé en ce que** l'élément adaptateur (26) présente, sur une première surface, la première structure de réglage par complémentarité de forme (54) de la première unité à complémentarité de forme (58), et, sur une seconde surface, une structure de réglage à complémentarité de forme (80) de la seconde unité à complémentarité de forme (60).

3. Système d'accouplement (18) selon la revendication 1 ou 2, **caractérisé en ce que** les éléments à complémentarité de forme (86, 88) d'au moins une structure de réglage par complémentarité de forme (80, 82) de la seconde unité à complémentarité de forme (60) sont disposés à intervalles réguliers.

4. Système d'accouplement (18) selon l'une des revendications précédentes, **caractérisé en ce que** l'élément adaptateur (26) est réalisé d'une seule pièce.

5. Système d'accouplement (18) selon l'une des revendications précédentes, **caractérisé en ce que** l'unité d'accouplement (22, 24) comprend un boîtier (64) qui, en fonctionnement, loge au moins en partie l'élément adaptateur (26) et l'élément de traction (20).

6. Système d'accouplement (18) selon la revendication 2, **caractérisé en ce que** l'unité d'accouplement (22, 24) comprend un boîtier (64) qui, en fonctionnement, loge au moins en partie l'élément adaptateur (26) et l'élément de traction (20).

7. Système d'accouplement (18) selon la revendication 5, **caractérisé en ce que** le boîtier (64) comporte au moins un élément de fixation (98) qui est formé par un creux ou un prolongement.

8. Système d'accouplement (18) selon la revendication 5, **caractérisé en ce que** le boîtier (64) comporte un premier élément d'appui (76) pour l'appui du moyen de traction (20).

9. Système d'accouplement (18) selon la revendication 6, **caractérisé en ce que** le boîtier (64) comprend un second élément d'appui (78) sur lequel est rapportée une structure de réglage par complémentarité de forme (82) de la seconde unité à complémentarité de forme (60), qui est destinée à réaliser une liaison par complémentarité de forme avec l'autre structure de réglage par complémentarité de forme (80) de la seconde unité à complémentarité de forme (60).

10. Système d'accouplement (18) selon la revendication 9, **caractérisé en ce que** les éléments à complémentarité de forme (88) de la structure de réglage par complémentarité de forme (82) rapportée du second élément d'appui (78) du boîtier (64) sont rapportés au moins en partie à intervalles réguliers.

11. Système d'accouplement (18) selon la revendication 5, **caractérisé en ce que** le boîtier (64), considéré dans le sens longitudinal d'une zone de logement de moyen de traction (66) du boîtier (64), présente deux profilés globalement en L (68, 70).

12. Système d'accouplement (18) selon l'une des revendications précédentes, **caractérisé en ce que** le moyen de traction (20) est conçu comme une courroie dentée.

13. Système d'accouplement (18) selon l'une des revendications précédentes, **caractérisé en ce que** l'élément adaptateur (26) est fabriqué au moins globalement en métal léger ou en matière plastique.

14. Système d'accouplement (18) selon l'une des revendications précédentes, **caractérisé en ce qu'**au moins une structure de réglage à complémentarité de forme (80, 82) de la seconde unité à complémentarité de forme (60) présente une denture avec des flancs d'entaille (84).

15. Entraînement de porte de cabine d'ascenseur (16), **caractérisé par** au moins un système d'accouplement (18) selon l'une des revendications 1 à 14.
